# EUROPEAN PATENT SPECIFICATION

(11) **EP 1 619 419 B1**
(45) Date of publication and mention of the grant of the patent: **25.07.2012**
(21) Application number: 04016960.9
(22) Date of filing: 19.07.2004
(51) Int. Cl.: F16H 57/04

(54) **Transmission case cover for all terrain vehicle**
Getriebedeckel für Geländewagen
Couverture de boîte de vitesses pour véhicule tout terrain

(43) Date of publication of application: 25.01.2006
(73) Proprietor: Kwang Yang Motor Co., Ltd., Cambridge CB2 1FD (GB)
(72) Inventor: Ho, Chao Chang, 48 Regent Street Cambridge CB2 1FD (GB); Yu, Meng-Lin, 48 Regent Street Cambridge CB2 1FD (GB)
(74) Representative: Horak, Michael

(56) References cited:
- EP-A- 1 170 475
- GB-A- 2 384 834
- US-A- 4 531 928
- US-A- 4 631 977
- US-A- 4 697 665
- US-A1- 2001 034 280
- US-B1- 6 338 688

## Description

### BACKGROUND OF THE INVENTION

### (a) Technical Field of the Invention

The present invention is related to a transmission case cover for all terrain vehicles, and more particularly, to one that provides additional functions without compromising the existing functions of the transmission case.

### (b) Description of the Prior Art

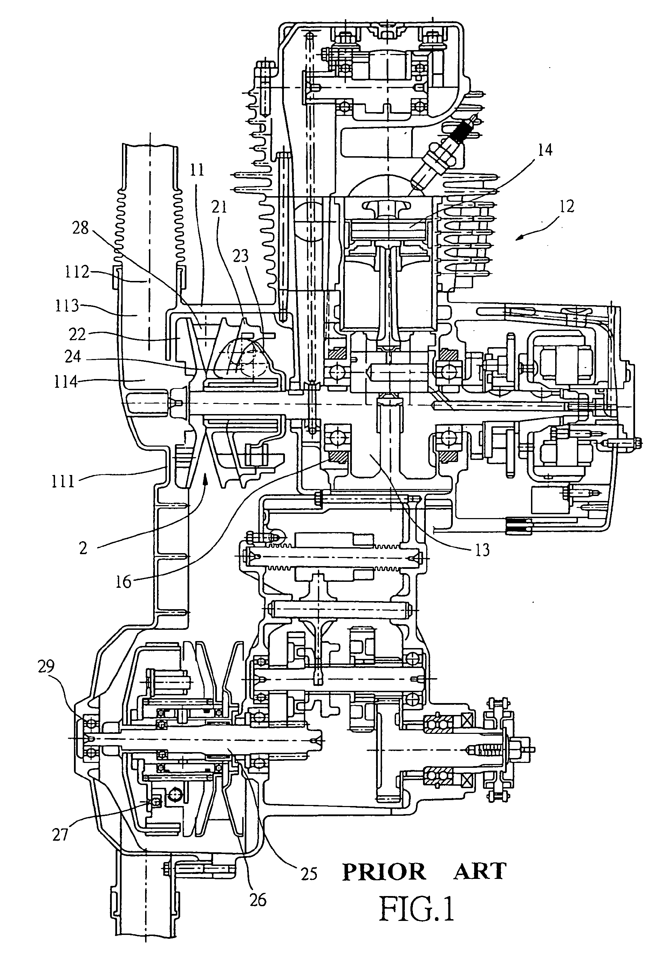

Referring to Fig. 1 of the accompanying drawings, a continuously variable transmission mechanism 2 is accommodated in a transmission case 11, and the power generated by an engine 12 is transmitted through a crankshaft 13 in a crankshaft case 16 for the continuously variable transmission mechanism 2 to drive. The continuously variable transmission mechanism 2 includes a pulley disk 21 disposed on the crankshaft 13, a driving disk 22 provided on the crankshaft 13 and located on one side of the pulley disk 21, a slanting board 23 provided on the crankshaft 13 and located on the other side of the pulley disk 21, a ball 24 provided and restricted between the pulley disk 21 and the slanting board 23, a driven shaft 25 to drive rear wheels, a driven pair of disks 26 provided on the driven shaft 25, a clutch 27 fixed to the driven shaft 25, a transmission belt 28, and a bearing 29 provided on a cover 111 of the transmission case 11 to support the driven shaft 25. One end of the transmission belt 28 is located between the driving disk 22 and the pulley disk 21 while the other end of the transmission belt 28 is arranged between the two driven disks 26.

Power generated from the explosion in the combustion chamber of the engine 12 pushes a piston 14 to engage in reciprocal movement to drive the crankshaft 13 to rotate, and both of the pulley disk 21 and the driving disk 22 rotate synchronously; meanwhile, the ball 24 will be moved outwardly when subject to centrifugal force. As a throttle opens wider, the rpm of the crankshaft 13 increases to make the ball 24 subject to larger centrifugal force; the ball 24 starts to travel outwardly to hold against the pulley disk 21; in turn, the pulley disk 21 moves toward the driving disk 22 to narrow down the distance between the driving disk 22 and the pulley disk 21, forcing the transmission belt 28 to expand for increasing the coverage of the revolving circumference of the transmission belt 28 and further to increase the rpm of both driven disks 26. The driven shaft 25 is then driven through the clutch 27 to drive the rear wheels (not illustrated). Consequently, the drive speed of the vehicle is increased.

However, when the throttle is released, the centrifugal force applied on the ball 24 is reduced, and the distance between the driving disk 22 and the pulley disk 21 gets larger in conjunction with the squeeze from the transmission belt 28 to reduce its coverage of the circumferential revolution. The drive speed of the vehicle is decreased since the rpm of both driven disks 26 is slowed down and that transmitted to the rear wheels is also slowed down due to the reduced rpm of the driven shaft 25.

Generally, to maintain the normal operation of the continuously variable transmission mechanism 2, an air guide port 112 will be provided in front of the transmission case cover 111 to introduce in the fresh air from the ambient for cooling down the continuously variable transmission mechanism 2. The air guide port 112 is made integrated with the transmission case cover 111, and the air introduced from the ambient enters from an inlet 114 through a passage 113 into the transmission case 11 to cool the continuously variable transmission mechanism 2. The structure of the transmission case cover 111 of the prior art has been used in the trade for a long time. However, it only functions to screen the continuously variable transmission mechanism 2 and to introduce in the fresh air from the ambient. To a modem enterprise that seeks after higher universality and lower production cost, it is justified to develop the transmission case cover that can be effectively upgraded with its common functions to lower its cost and increase its universality without compromising the existing functions.

GB-A-2 384 834 is the closest prior art to the present invention disclosing the features of the preamble of claim 1. However, the present invention differs from the reference in that the transmission mechanism comprises a transmission case cover having a port, a cover holder provided on an outer side of the transmission case cover to define a space encompassed by said cover holder, and a cap removable mounted on the cover holder to enclose the space without affecting admittance of air into the transmission case cover through the port, the transmission cover having an opening coaxial with an opening provided on the cover holder and facing the crankshaft and further coaxial with the crankshaft. Hence, the present invention can be clearly distinguished from the reference.

### SUMMARY OF THE INVENTION

It is the primary object of the present invention to provide an all terrain vehicle having a transmission case which comprises: an engine, a crankshaft coupled to said engine, a continuously variable transmission mechanism; said continuously variable transmission mechanism comprising a driving pair of disks driven by said crankshaft, a driven pair of disks adapted to a driven shaft, a transmission belt mounted to said driving pair of disks and driven pair of disks, and a power from said engine being transmitted from said pair of disks to said driven pair of disks through said transmission belt, a transmission case cover having a port, said transmission case cover characterized in that said transmission case cover has a cover holder provided on an outer side of said transmission case cover to define a space encompassed by said cover holder, and a cap removable mounted on said cover holder to enclose said space so that fresh air can be admitted into said transmission case cover through said port and an inlet of said transmission case cover to cool said continuously variable transmission mechanism, said transmission case cover having an opening coaxial with an opening provided on said cover holder and facing said crankshaft and further coaxial with said crankshaft, said cover holder having a design allowing a manual pull starter to be mounted on the crankshaft of the engine within the transmission case cover. According to the present invention, the cost can be reduced and the universality can be promoted without compromising the efficacy of the continuously variable transmission.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Fig. 1 is a schematic view showing a structure of an engine of the prior art.
Fig. 2 is a schematic view showing a local part of an engine of a preferred embodiment of the present invention.
Fig. 3 is a perspective view of a transmission case cover of the present invention.
Fig. 4 is a schematic view showing a local part of an engine of another preferred embodiment of the present invention.

### DETAILED DESCRIPTION OF THE PREFERRED EMBODIMENT

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

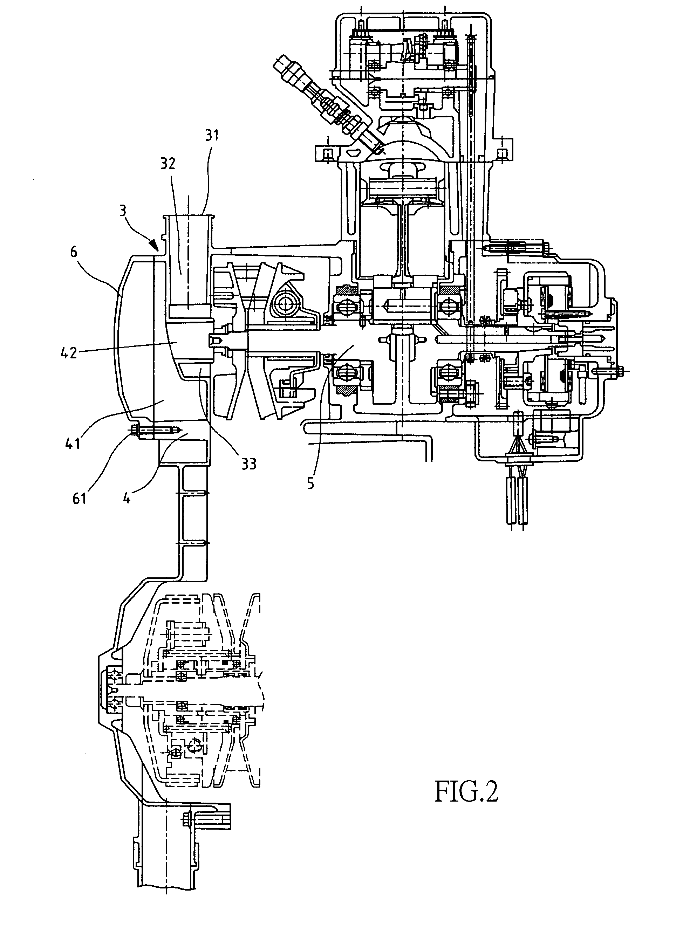

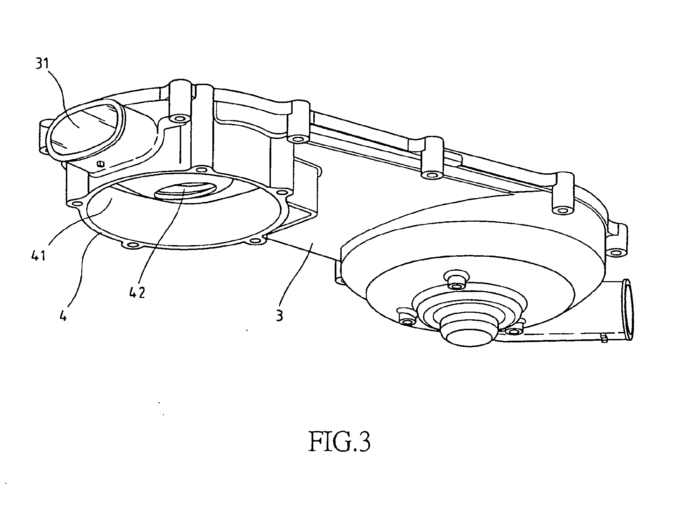

Referring to Figs. 2 and 3, a preferred embodiment of the present invention is provided with a cover holder 4 on the outer side of a transmission case cover 3 at where closer to a port 31 to define a space 41 encompassed by the cover holder 4. The space 41 is enclosed with a cap 6, which can be mounted or removed through a screw 61 as desired without affecting the admittance of the ambient air into the transmission case cover 3 through the port 31, a passage 32 and an inlet 33. The transmission case cover 3 has an opening 42 coaxial with the opening provided on the cover holder 4 and facing the crankshaft 5 and further coaxial with the crankshaft 5.

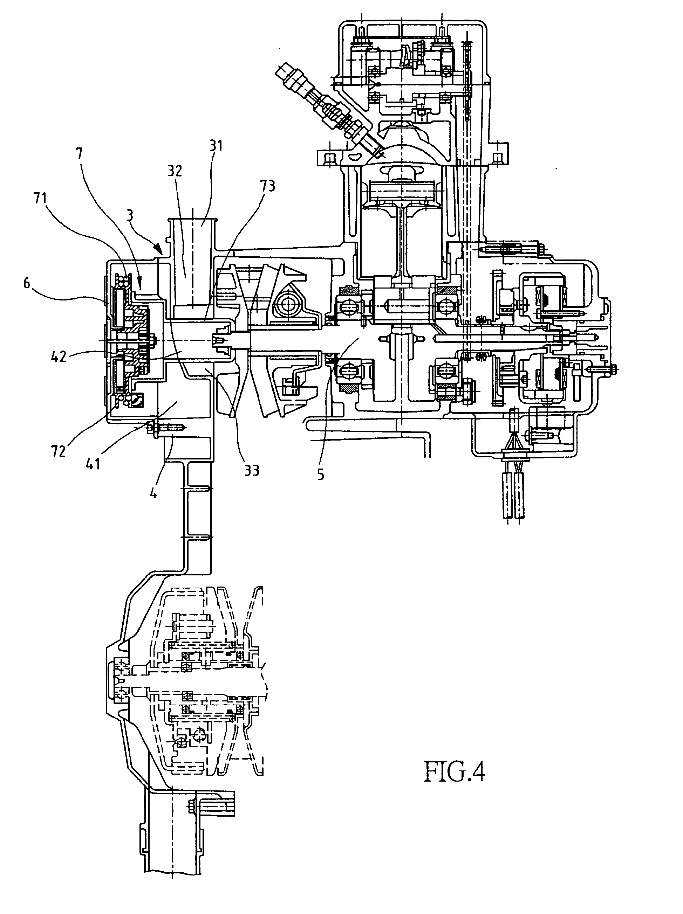

Now referring to Fig. 4 for another preferred embodiment of the present invention, the cover holder 4 is provided on one side of the transmission case cover 3 and the cap 6 is used to close up the space 41 encompassed by the cover holder 4 so to accommodate any member that provides additional function. As illustrated in Fig. 4, a pull starter 7 of the prior art is disposed inside the cap 6. With a cord 71 adapted to the starter 7 pulled to drive a drum 72, and further a starter gear 73, the crankshaft 5 rotates synchronously to start the engine. Meanwhile, the fresh air introduced from the ambient through the port 31 is not affected by the presence of the pull starter 7 provided in the cap 6. The fresh air remains passing through the port 31 into the passage 32, and the inlet 33 to enter into the transmission case to cool the continuously variable transmission mechanism. Without affecting the existing function of the transmission case and the continuously variable transmission mechanism, the adaptation of the holder 4 and the opening 42 in conjunction with the enclosure by the cap 6 allows an additional space for the accommodation of a manual pull starter 7 to start the engine.

The present invention, by means of providing the holder 4, the opening 42 and the cap 6 allows the transmission case applicable to the model of the vehicle with or without the manual pull start of the engine at the same time to share the same transmission case cover 3 for cost reduction and increased universality of the transmission case cover 3.

## Claims

1. An all terrain vehicle having a transmission case (11) comprising:
an engine (12),
a crankshaft (5) coupled to said engine (12),
a continuously variable transmission mechanism (2);
said continuously variable transmission mechanism (2) comprising:
a driving pair of disks (22, 23) driven by said crankshaft (5),
a driven pair of disks (26) adapted to a driven shaft (25),
a transmission belt (28) mounted to said driving pair of disks (22, 23) and driven pair of disks (26), and a power from said engine (12) being transmitted from said pair of disks (22, 23) to said driven pair of disks (26) through said transmission belt (28),
a transmission case cover (3) having a port (31),
said transmission case cover (3) **characterized in that** said transmission case cover (3) has a cover holder (4) provided on an outer side of said transmission case cover (3) to define a space (41) encompassed by said cover holder (4), and a cap (6) removable mounted on said cover holder (4) to enclose said space (41) so that fresh air can be admitted into said transmission case cover (3) through said port (31) and an inlet (32) of said transmission case cover (3) to cool said continuously variable transmission mechanism (2), said transmission case cover (3) having an opening (42) coaxial with an opening provided on said cover holder (4) and facing said crankshaft (5) and further coaxial with said crankshaft (5), said cover holder (4) having a design allowing a manual pull starter (7) to be mounted on the crankshaft (5) of the engine within the transmission case cover (3).

2. The transmission case cover as claimed in claim 1, wherein a pull starter (7) to start said engine is disposed inside said cap (6).

## Patentansprüche

1. Ein Geländewagen mit einem Getriebegehäuse (11) bestehend aus:
einem Motor (12),
einer Kurbelwelle (5) gekoppelt mit dem besagten Motor (12),
einem stufenlosen Getriebe-Mechanismus (2);
der erwähnte stufenlose Getriebe-Mechanismus (2) bestehend aus:
einem Paar von angetriebenen Scheiben (22, 23) angetrieben durch die erwähnte Kurbelwelle (5),
einem Paar von angetriebenen Scheiben (22, 26) angepasst an eine Antriebswelle, (25),
einem Transmissionsriemen (28) der an das angetriebene Paar von Scheiben montiert ist (22, 23)
und das angetriebene Paar von Scheiben (26), und eine Leistung vom erwähnten Motor (12) übertragen vom erwähnten Paar Scheiben (22, 23) zum erwähnten Paar angetriebenen Scheiben (26) durch den erwähnten Transmissionsriemen (28),
ein Getriebedeckel (3) mit einem Anschluss (31),
der erwähnte Getriebedeckel (3) zeichnet sich so aus, dass
der Getriebedeckel (3) über einen Deckelhalter (4) verfügt, der sich auf der Außenseite des erwähnten Getriebedeckels (3) befindet um einen Abstand (41) zu definieren, der vom erwähnten Deckelhalter (4) enthalten ist, und eine abnehmbare Kappe (6), die auf dem erwähnten Deckelhalter (4) montiert ist, um den erwähnten Abstand (41) einzufassen, damit frische Luft in den erwähnten Getriebedeckel (3) durch den erwähnten Anschluss (31) und einen Einlass (32) des erwähnten Getriebedeckels (3) gelangen kann
um den erwähnten stufenlosen Getriebe-Mechanismus (2) abzukühlen
der erwähnte Getriebedeckel (3) mit einer Öffnung (42), die sich gleichachsig mit einer Öffnung auf dem erwähnten Deckelhalter (4) und gegenüber der erwähnten Kurbelwelle (5) befindet und weiterhingleichachsig mit der erwähnten Kurbelwelle (5), der erwähnte Deckelhalter (4) verfügt über ein Design, was ein manuelles Ziehen des Anlassers (7) ermöglicht,der auf die Kurbelwelle (5) des Motors im Inneren des Getriebedeckels (3) montiert werden soll.

2. Der Getriebedeckel wie in Anspruch 1 beschrieben, worin sich ein durch manuelles Ziehen zu betätigender Anlasser(7) befindet, um den erwähnten Motor im Inneren der erwähnten Kappe (6) zu starten.

## Revendications

1. Un véhicule tout terrain comporte une boîte de vitesses (11) comprenant:
un moteur (12),
un vilebrequin (5) couplé au moteur (12),
un mécanisme de transmission à variation continue (2);
le mécanisme de transmission à variation continue (2) comprenant:
une paire de disques d'entraînement (22, 23) entraînés par le vilebrequin (5),
une paire de disques entraînés (26) adaptés à un arbre entraîné (25),
une courroie de transmission (28) monté à la paire de disques d'entraînement (22, 23) et une paire de disques entraînés (26), ainsi que la force depuis le moteur (12) étant transmise à partir de la paire de disques (22,23) à la paire de disques entraînés (26) à travers la courroie de transmission (28),
une couverture de boîte de vitesses (3) comportant un orifice (31),
la couverture de boîte de vitesses (3), **caractérisée** dans cette boîte de vitesses (3) comporte un porte-couverture (4) prévu sur un côté extérieur de la couverture de boîte de vitesses (3) afin de définir un espace (41) englobé par le porte-couverture (4), et un couvercle (6) amovible monté sur le porte-couverture (4) afin d'enfermer l'espace (41) de sorte que l'air frais peut être admis dans la couverture de boîte de vitesses (3) à travers l'orifice (31) et une entrée (32) la couverture de boîte de vitesses (3) à refroidir le mécanisme de transmission à variation continue (2), la couverture de boîte de vitesses (3) ayant une ouverture (42) coaxiale à une ouverture prévue sur le porte-couverture (4) et faisant face au vilebrequin (5), et en outre coaxiale au vilebrequin (5), le porte-couverture/ ayant une conception permettant un lanceur de traction manuelle (7) d'être monté sur le vilebrequin (5) du moteur de la couverture de boîte de vitesses (3).

2. La couverture de boîte de vitesses selon le relevé 1, dans laquelle un lanceur de traction (7) de démarrer du moteur est disposé à l'intérieur du couvercle (6).
